# EUROPÄISCHE PATENTSCHRIFT

(11) **EP 0 655 374 B1**
(45) Veröffentlichungstag und Bekanntmachung des Hinweises auf die Patenterteilung: **25.02.1998**
(21) Anmeldenummer: 94118350.1
(22) Anmeldetag: 22.11.1994
(51) Int. Cl.: B60T 8/32

(54) **Antiblockierbremsanlage für Fahrzeuge**
Anti-lock brake system for vehicles
Système de freinage antiblocage pour véhicules

(30) Priorität: 25.11.1993 DE 4340210
(43) Veröffentlichungstag der Anmeldung: 31.05.1995
(73) Patentinhaber: GRAU GMBH, D-69123 Heidelberg (DE)
(72) Erfinder: Sulzyc, Georg, D-69214 Eppelheim (DE)
(74) Vertreter: Rehberg, Elmar, Dipl.-Ing.

(56) Entgegenhaltungen:
- EP-A- 0 307 588
- WO-A-92/19478
- DE-A- 3 838 536
- FR-A- 2 537 520

## Beschreibung

Die Erfindung betrifft eine Antiblockierbremsanlage für Fahrzeuge, mit einer Antriebsachse, die für jede Fahrzeugseite je ein Rad, einen Bremszylinder und je einen diesem Rad zugeordneten Drehzahlsensor aufweist, mit einem gemeinsamen Regelventil für den Bremsdruck in den Bremszylindern und mit einer Elektronik zur Verarbeitung der von den Drehzahlsensoren abgegebenen Signale und zur Ansteuerung des Regelventils, wobei von dem Regelventil eine Ausgangsleitung zu einer Verzweigungsstelle und von dort je eine Abzweigleitung zu dem Bremszylinder des betreffenden Rades führt. Neben der Einzelrad- oder Individualregelung sind vereinfachte Antiblockierbremsanlagen bekannt, bei denen sowohl für druckluftgebremste Fahrzeuge als auch für hydraulisch gebremste Fahrzeuge Achs- oder Radgruppenregelungen über nur ein einziges gemeinsames Regelventil erfolgen.

Die EP-PS 0 307 588 zeigt eine Antiblockierbremsanlage der eingangs beschriebenen Art. Es ist ein gemeinsames Regelventil für den Bremsdruck in den Bremszylindern einer Achse vorgesehen. Die Bremszylinder sind parallelgeschaltet. Zu diesem Zweck geht von dem Regelventil eine Ausgangsleitung aus, die sich an einer Verzweigungsstelle in je einer Abzweigleitung zu je einem Bremszylinder an dem betreffenden Rad der jeweiligen Fahrzeugseite fortsetzt. Mit einer solchen Antiblockierbremsanlage können die von Drehzahlsensoren abgeleiteten Signale mit Hilfe einer Elektronik im Sinne einer Antiblockier-Regelung genutzt werden. Eine Antischlupfregelung (ASR) ist dabei nicht vorgesehen.

Der Erfindung liegt die Aufgabe zugrunde, ausgehend von einer Antiblockierbremsanlage der eingangs beschriebenen Art eine Möglichkeit bereitzustellen, auch eine Antischlupfregelung zu ermöglichen, also mit einfachen Mitteln eine ABS- und eine ASR-Regelung zu erreichen.

Erfindungsgemäß wird dies bei der Antiblockierbremsanlage der eingangs beschriebenen Art dadurch erreicht, daß an der Verzweigungsstelle ein ASR-Ventil vorgesehen ist, welches in der nicht-betätigten Stellung die Ausgangsleitung mit den beiden Abzweigleitungen verbindet und in der betätigten Stellung die Ausgangsleitung von der betreffenden Abzweigleitung absperrt und über ein Hilfssystem Bremsdruck in dem betreffenden Bremszylinder aufbaut.

Die Erfindung geht von dem Gedanken aus, die vorhandenen Elemente einer Antiblockierbremsanlage mit nur einem gemeinsamen Regelventil für zwei oder mehr Räder zu nutzen und die von den Drehzahlsensoren bereitgestellten Verzögerungssignale für eine ABS-Regelung und die bereitgestellten Schlupfsignale für eine ASR-Regelung einzusetzen. Hierzu ist es erforderlich, lediglich ein ASR-Ventil an der Verzweigungsstelle anzuordnen, welches in der nicht-betätigten Stellung die Funktion einer Verzweigung, also eines T-Stückes, erbringt, so daß die ABS-Regelung in der gewohnten Weise ablaufen kann. Treten dagegen Durchdreherscheinungen an einem Rad auf, wird die ASR-Regelung erforderlich. Hierzu wird das ASR-Ventil betätigt und zunächst die Ausgangsleitung von der betreffenden Abzweigleitung abgesperrt. Das ASR-Ventil unterscheidet die beiden Bremszylinder bzw. die zu diesen führenden Abzweigleitungen pro Fahrzeugseite und stellt über ein Hilfssystem Bremsdruck individuell in dem betreffenden Bremszylinder bereit, so daß das durchdrehende Rad gebremst wird. Der wesentliche Vorteil dieser Antiblockierbremsanlage mit ASR-Funktion besteht darin, daß keine aufwendigen Mehrkanal-Systeme für die Antischlupfregelung erforderlich werden. Es wird vielmehr eine Einfachanlage ohne größere Systemveränderungen aufgezeigt, die sowohl bei rein pneumatischen Bremsanlagen wie auch bei pneumatisch/hydraulischen Bremsanlagen einsetzbar ist. Überraschenderweise ist es bei dieser einfachen Anlage möglich, durch einen geringfügigen Mehraufwand das ASR-Ventil auch als "Hilfsbremsventil" zu nutzen, wenn beispielsweise der der Antriebsachse eines Kraftfahrzeuges zugeordnete pneumatische Bremskreis ausgefallen ist.

In der einfachsten Ausführung kann über das Hilfssystem ein konstanter festgelegter Bremsdruck in dem betreffenden Bremszylinder aufgebaut werden. Mit geringem Mehraufwand ist es jedoch vorteilhaft möglich, daß das ASR-Ventil zum Aufbau eines modulierenden Bremsdruckes in dem betreffenden Bremszylinder ausgebildet ist. Damit kann auf das Verhalten des durchdrehenden Rades hinsichtlich des eintretenden Schlupfes Einfluß genommen werden.

Das ASR-Ventil kann als Magnetventil ausgebildet sein und mindestens drei von der Elektronik gesteuerte Magnete und je einen Verstärkerkolben für jede Abzweigleitung aufweisen. Das ASR-Ventil wird damit hinsichtlich der Magnete elektrisch angesteuert. Es ist mit einem eigenen Druckluftanschluß versehen. Von den drei Magneten ist einer als Vorsteuermagnet ausgebildet, also ohne eigene Entlüftung, während die beiden anderen je der betreffenden Abzweigleitung zugeordnet sind und über eine eigene Entlüftung verfügen. Über jeden Verstärkerkolben wird zusätzlich eine verstärkende Wirkung erreicht, also der Bremsdruck verstärkt. Eine Regelung im Sinne einer Modulation erfolgt über die Elektronik. Jedem Verstärkerkolben kann ein beweglich dichtend im Gehäuse des ASR-Ventils gelagerter Schließkolben zugeordnet sein, der als Bestandteil der Abzweigleitung eine Bohrung aufweist, die mit einem Fortsatz des Verstärkerkolbens verschließbar ist. Der Verstärkerkolben und der Schließkolben bilden damit zusammen ein Absperrventil zur Trennung der Ausgangsleitung von der betreffenden Abzweigleitung. Gleichzeitig gestattet es der Schließkolben, den Bremsdruck in dem betreffenden Bremszylinder aufzubauen.

Der Verstärkerkolben kann in einen inneren und einen äußeren Kolben unterteilt sein, so daß ein zwischen Schließkolben und Verstärkerkolben gebildetes Absperrventil nur mit einer verminderten Kraft belastet wird bzw. ein Teil der Übertragungskräfte des Verstärkerkolbens von nachgiebigen Elementen zwischen Verstärkerkolben und Schließkolben ferngehalten wird. Die Schließkraft wird damit vorteilhaft begrenzt, obwohl erhebliche Verstärkungkräfte übertragen werden.

Das Regelventil kann in rein pneumatischen Anlagen oder auch in pneumatisch/hydraulischen Anlagen als pneumatisches Ventil ausgebildet sein. Bei pneumatisch/hydraulischen Anlagen ist in der Ausgangsleitung ein Druckwandler oder Druckübersetzer pneumatisch/hydraulisch vorgesehen, wobei das ASR-Ventil pneumatisch unterstützt ausgebildet ist. Wesentliche Bestandteile des Hilfssystems des ASR-Ventils sind pneumatisch ausgebildet, wobei auch im Bereich des Verstärkerkolbens und des Schließkolbens die Trennung pneumatisch/hydraulisch durchgeführt wird.

Das ASR-Ventil kann auch für jeden Verstärkerkolben zwei in Reihe geschaltete Magnetventile aufweisen, von denen die vorgeschalteten Magnetventile ohne und die nachgeschalteten mit eigener Entlüftung ausgebildet sind. Dies erbringt den Vorteil, daß die Räder jeder Fahrzeugseite auch gleichzeitig in unterschiedlicher Weise einer ASR-Regelung unterworfen werden können.

Dem ASR-Ventil kann ein Schaltventil vorgeschaltet sein, welches in der einen Stellung Vorratsdruck und in der anderen Stellung modulierten Bremsdruck zu dem ASR-Ventil schickt. Damit ist es möglich, zusätzlich eine Hilfsbremswirkung zu verwirklichen, die sich beispielsweise dann als nützlich erweisen kann, wenn der Vorratsdruck in dem der Antriebsachse zugeordneten Vorratsbehälter nicht erreicht wird oder dieser Kreis defekt ist. Über ein in diesem defekten Kreis vorgesehenen Druckschalter wird das Schaltventil, welches als 3/2-Wege-Magnetventil ausgebildet sein kann, betätigt, so daß es in diesem Falle den modulierten Bremsdruck einer nicht angetriebenen Achse letztlich auf die Bremszylinder der angetriebenen Achse schickt.

Für rein pneumatische Bremsanlagen kann das ASR-Ventil als pneumatisches Relaisventil ausgebildet sein. Auch der dabei eingesetzte Relaiskolben stellt einen Verstärkerkolben dar. Wenn das ASR-Ventil für jeden Verstärkerkolben einen hohlen Doppelventilkörper aufweist, kann die jeweilige Abzweigleitung durch diesen hohlen Doppelventilkörper hindurchgeführt sein, so daß damit zugleich die Absperrwirkung bei ASR-Regelung erreicht wird.

Bevorzugte Ausführungsbeispiele der Erfindung werden im Folgenden beschrieben. Es zeigen:
- Figur 1: ein Schaltschema einer pneumatisch/hydraulischen ABS/ASR-Anlage,
- Figur 2: einen Schnitt durch ein ASR-Ventil in einer ersten Ausführungsform,
- Figur 3: einen Schnitt durch ein ASR-Ventil in einer weiteren Ausführungsform,
- Figur 4: einen Schnitt durch ein ASR-Ventil in einer weiteren Ausführungsform,
- Figur 5: ein Schaltschema der ABS/ASR-Anlage gemäß Figur 1 mit zusätzlicher Hilfsbremse und
- Figur 6: einen Schnitt durch ein rein pneumatisch ausgebildetes ASR-Ventil.

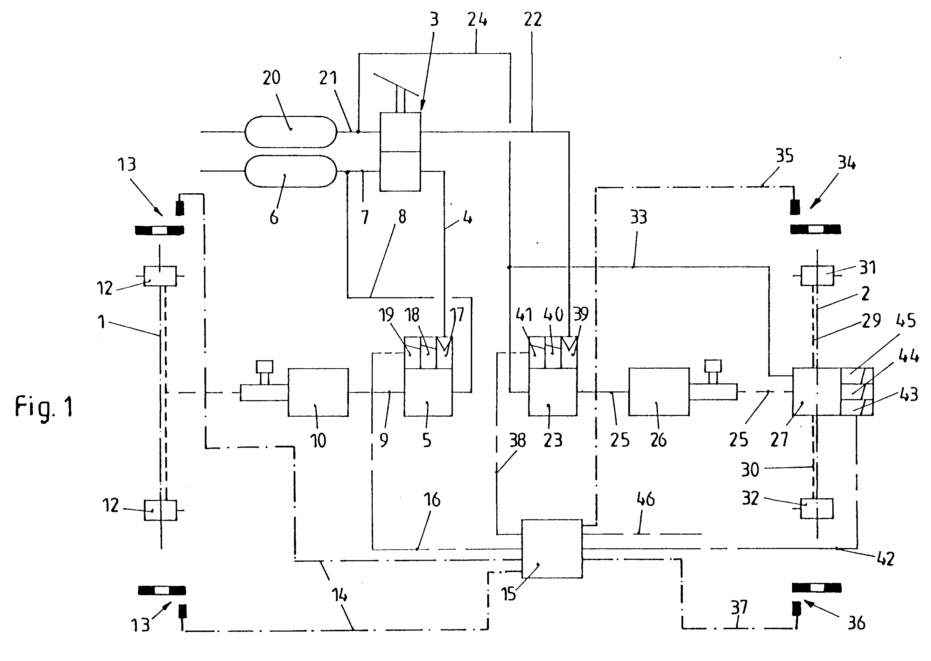

In Figur 1 ist eine nicht angetriebene Lenkachse 1, beispielsweise eine Vorderachse, und eine Antriebsachse 2, beispielsweise eine Hinterachse, schematisch angedeutet. Von einem zweikreisig ausgebildeten Bremsventil 3 führt eine Steuerleitung 4 zu einem der Lenkachse 1 zugekehrten Regelventil 5. Dieser Kreis besitzt einen Vorratsbehälter 6, von dem eine Leitung 7 zu dem Bremsventil 3 führt. Von der Leitung 7 zweigt eine Leitung 8 ab, über welche das Regelventil 5 mit Vorratsdruckluft versorgt wird. Vom Regelventil 5 führt eine Ausgangsleitung 9 zu einem pneumatisch/hydraulisch wirkenden Druckübersetzer 10, von dem eine sich verzweigende hydraulische Leitung (gestrichelt dargestellt) zu den beiden Bremszylindern 12 der Lenkachse 1 führt. Die beiden Räder der Lenkachse 1 (nicht dargestellt) sind mit Drehzahlsensoren 13 versehen, von denen elektrische Leitungen 14 zu einer Elektronik 15 führen. Über eine elektrische Leitung 16 werden drei Magnetventile 17, 18, 19 an dem Regelventil 5 elektrisch angesteuert.

Analoges gilt für den zweiten Kreis, der der Antriebsachse 2 zugeordnet ist. Von einem Vorratsbehälter 20 führt eine Leitung 21 zu dem Bremsventil 3 und von diesem eine Steuerleitung 22 zu einem Regelventil 23, welches wie das Regelventil 5 ausgebildet sein kann. Über eine Leitung 24, die von der Leitung 21 abzweigt, wird das Regelventil 23 mit Vorratsluft versorgt. Von dem Regelventil 23 führt eine Ausgangsleitung 25 über einen pneumatisch/hydraulisch ausgebildeten Druckübersetzer 26 zu einem ASR-Ventil 27. Die Ausgangsleitung 25 zwischen dem Regelventil 23 und dem Druckübersetzer 26 ist als pneumatische Leitung ausgebildet, während der Leitungsteil der Ausgangsleitung 25 zwischen dem Druckübersetzer 26 und dem ASR-Ventil 27 als hydraulische Leitung ausgebildet ist. An einer Verzweigungsstelle 28 in dem ASR-Ventil 27 verzweigt sich die Ausgangsleitung 25 in je eine hydraulische Abzweigleitung 29 und 30, wobei die Abzweigleitung 29 zu einem Bremszylinder 31 der rechten Fahrzeugseite und die Abzweigleitung 30 zu einem Bremszylinder 32 der linken Fahrzeugseite an der Antriebsachse 2 führt. Über eine Leitung 33, die von der Leitung 24 abzweigt oder jedenfalls an den Vorratsbehälter 20 angeschlossen ist, wird das ASR-Ventil 27 mit Vorratsluft versorgt. Das Rad oder die Räder der rechten Fahrzeugseite sind mit einem Drehzahlsensor 34 ausgestattet, von dem eine elektrische Leitung 35 zu der Elektronik 15 führt. Auch die linke Fahrzeugseite verfügt über einen Drehzahlsensor 36, der über eine elektrische Leitung 37 an die Elektronik 15 angeschlossen ist. Von der Elektronik 15 führt einerseits eine elektrische Leitung 38 zu drei Magnetventilen 39, 40, 41 an dem Regelventil 23. Eine weitere elektrische Leitung 42 führt von der Elektronik 15 zu Magnetventilen 43, 44, 45 an dem ASR-Ventil 27. Die Elektronik 15 wird über eine Leitung 46 mit Strom versorgt.

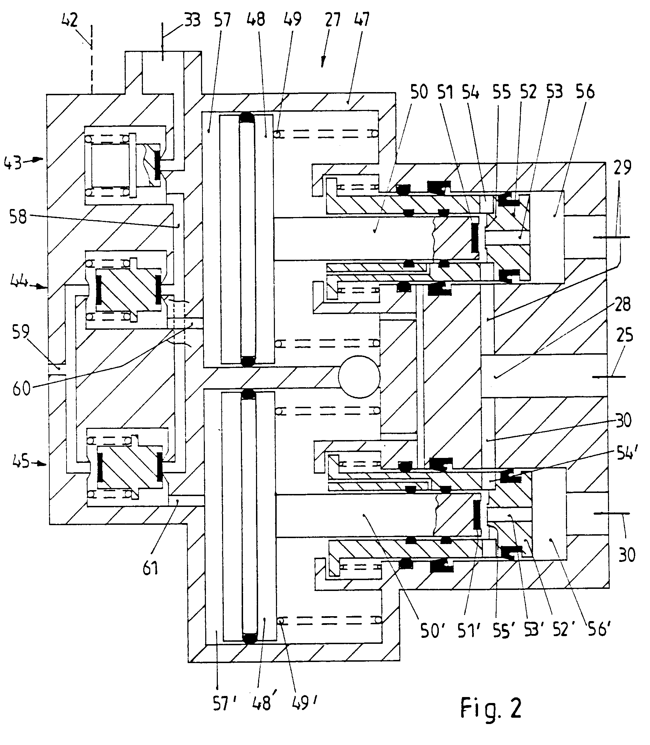

Figur 2 zeigt eine mögliche konstruktive Ausführungsform des ASR-Ventils 27 in der Bremsanlage gemäß Figur 1. Das ASR-Ventil 27 weist ein Gehäuse 47 auf, an welches in der dargestellten Weise die Leitungen 25, 29, 30, 33, 42 angeschlossen sind. In dem Gehäuse 47 ist ein Verstärkerkolben 48 dichtend und gleitend geführt, der auf einer Rückführfeder 49 abgestützt ist und einen kolbenstangenähnlichen Fortsatz 50 trägt. Am freien Ende des Fortsatzes 50 ist eine Ventilplatte 51 aus Gummi oder anderem elastomeren Material angeordnet. Dem Verstärkerkolben 48 ist ein Schließkolben 52 zugeordnet, der in der gezeigten Art und Weise gleitend und dichtend im Gehäuse 47 des ASR-Ventils 27 gelagert ist. Er weist mittig eine Bohrung 53 sowie Querbohrungen 54 auf. Die Bohrung 53 ist auf der dem Verstärkerkolben 48 zugekehrten Seite von einem vorspringenden Rand 55 umgeben, die mit der Ventilplatte 51 ein Absperrventil 51, 55 bildet. Die an das Gehäuse 47 in einem entsprechenden Anschluß herangeführte Ausgangsleitung 25 verzweigt sich an einer Verzweigungsstelle 28 in die Abzweigleitung 29, die durch die Bohrung 53 des Schließkolbens 52 hindurchgeführt ist und der rechten Fahrzeugseite bzw. dem diesbezüglichen Rad zugeordnet ist. In geschlossenem Zustand des Absperrventils 51, 55 teilt der Schließkolben 52 im ASR-Ventil einen Druckraum 56 ab, über den mit Hilfe des Verstärkerkolbens 48 hydraulischer Druck in dem Bremszylinder 31 aufgebaut werden kann.

Analog zur Ausbildung des Verstärkerkolbens 48 für die rechte Fahrzeugseite ist ein Verstärkerkolben 48' für die linke Fahrzeugseite vorgesehen, ebenso ein Schließkolben 52'. Auch die übrigen Einzelheiten sind mit einem gestrichenen Bezugszeichen versehen. Bezüglich der Beschreibung kann auf die vorangehenden Ausführungen verwiesen werden. Der Verstärkerkolben 48 teilt anströmseitig einen Wirkraum 57 und der Verstärkerkolben 48' einen Wirkraum 57' im Gehäuse 47 ab.

Das ASR-Ventil 27 weist die Magnetventile 43, 44, 45 auf, wobei das Magnetventil 43 als gemeinsames Vorsteuerventil ausgebildet ist und lediglich die beiden Stellungen offen und geschlossen aufweist. In der Stellung geschlossen, wie dargestellt, ist die Leitung 33 abgesperrt, über die Vorratsdruckluft ansteht. Von dem Magnetventil 43 führt eine Leitung 58 sowohl zu dem Magnetventil 44 als auch zu dem Magnetventil 45. Die beiden Magnetventile 44 und 45 weisen andererseits je eine Entlüftungsöffnung 59 auf. Das Magnetventil 44 ist über eine Leitung 60 an den Wirkraum 57 des Verstärkerkolbens 48 der rechten Fahrzeugseite angeschlossen. Von dem Magnetventil 45 führt eine Leitung 61 zu dem Wirkraum 57' des Verstärkerkolbens 48' der linken Fahrzeugseite.

Bei Auftreten eines Verzögerungssignales an einem oder beiden Drehzahlsensoren 34 und/oder 36 wird die Antiblockierbremsanlage zur ABS-Regelung benutzt. Hierbei verbleibt das ASR-Ventil 27 in der in Figur 2 gezeigten Ausgangsstellung, d. h. die Magnetventile 43, 44, 45 werden über die Elektronik 15 nicht angesprochen. Es erfolgt vielmehr je nach der angewendeten ABS-Regelphilosophie, beispielsweise in Select-Low-Regelung oder in Select-High-Regelung eine Aussteuerung entsprechender Signale von der Elektronik 15 über die elektrische Leitung 38 zu den Magnetventilen 39, 40, 41 des Regelventils 23. In bekannter Weise wird dabei letztlich der Bremsdruck in den beiden Bremszylindern 31 und 32 konstant gehalten, abgesenkt oder erhöht, also letztlich moduliert, wie dies bekannt ist.

Droht dagegen in einer entsprechenden Fahrsituation das Durchdrehen eines Rades, beispielsweise des Rades der rechten Fahrzeugseite der Antriebsachse 2, so wird der Drehzahlsensor 34 ein entsprechendes Schlupfsignal über die elektrische Leitung 35 an die Elektronik 15 weitergeben. Die Elektronik 15 steuert dann über die elektrische Leitung 42 das ASR-Ventil 27 an, und zwar so, daß das Magnetventil 43 geöffnet wird und das Magnetventil 44 in seine andere, in Figur 2 nicht dargestellte Stellung verbracht wird, während das Magnetventil 45 unerregt bleibt. Damit gelangt Vorratsluft aus der Leitung 33 in die Leitung 58 und über die Leitung 60 in den Wirkraum 57 am Verstärkerkolben 48 der rechten Fahrzeugseite, während der Verstärkerkolben 48' der linken Fahrzeugseite in der in Figur 2 dargestellten Ausgangsstellung verbleibt. Der Verstärkerkolben 48 wird demzufolge das Absperrventil 51, 55 schließen, also die Abzweigleitung 29 zu dem Bremszylinder 31 von der Ausgangsleitung 25 absperren und in der Folge entsprechend der Übersetzung der Flächenverhältnisse im Druckraum 56 einen erhöhten hydraulischen Druck aufbauen, der zu einer Bremsung des Rades der rechten Fahrzeugseite der Antriebsachse 2 führt. Je nach den dann folgenden Schlupfsignalen des Drehzahlsensors 34 werden die Magnetventile 43 und 44 entsprechend betätigt, so daß der zu dem Bremszylinder 31 ausgesteuerte Druck moduliert wird. Entsprechendes gilt, wenn nicht das der rechten Fahrzeugseite zugeordnete Rad, sondern das der linken Fahrzeugseite zugeordnete Rad der Antriebsachse 2 durchzudrehen droht. In diesem Falle werden die Magnetventile 43 und 45 entsprechend betätigt, während das Magnetventil 44 unerregt bleibt.

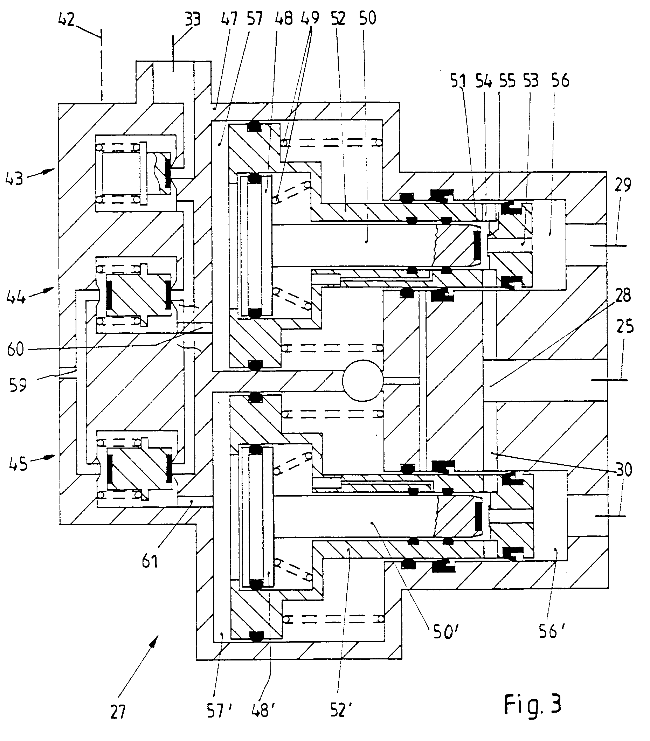

Die Ausführungsform des ASR-Ventils 27 gemäß Figur 3 baut auf der Ausführungsform gemäß Figur 2 auf, so daß hierauf verwiesen werden kann. Die Verstärkerkolben sind hier lediglich in einen inneren und einen äußeren Kolben aufgeteilt. Mit anderen Worten ist der Schließkolben 52 den Verstärkerkolben 48 umgreifend verlängert, so daß der Wirkraum 57 von beiden Kolben 48 und 52 begrenzt wird. Damit wird die Verstärkungskraft auf den Druckraum 56 von beiden Kolben 48, 52 aufgebracht und nicht sämtliche Kraft über die Ventilplatte 51 des Absperrventils 51, 55 geleitet.

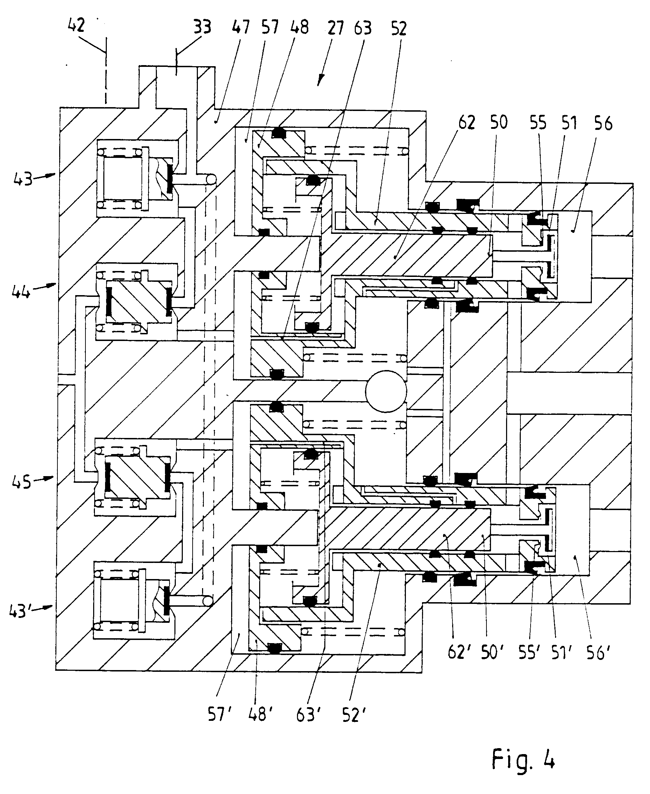

Bei der Ausführungsform des ASR-Ventils 27 gemäß Figur 4 sind zwei Magnetventile 43, 43' als Vorsteuerventile eingesetzt, wobei das Magnetventil 44 dem Magnetventil 43 nachgeordnet ist, während andererseits das Magnetventil 45 dem Magnetventil 43 nachgeordnet ist. Damit ist es möglich, gleichzeitig Schlupfsignale von beiden Drehzahlsensoren 34, 36 zu verarbeiten, also zwei gleichzeitig durchdrehende Räder verschiedener Fahrzeugseiten an einer Antriebsachse 2 modulierend abzubremsen. Die Absperrventile 51, 55 bzw. 51', 55' zum Abschließen der Druckräume 56 und 56' sind hier etwas anders arbeitend ausgebildet. Ein gesonderter Hilfskolben 62 bzw. 62' wird über eine Leitung 63, 63' über den Wirkraum 57 bzw. 57' beaufschlagt. Der Hilfskolben 62 bzw. 62' trägt auch den Fortsatz 50 bzw. 50' und die Ventilplatte 51 bzw. 51'. Die Funktion auch dieses ASR-Ventils 27 ergibt sich aus den vorstehenden Ausführungen.

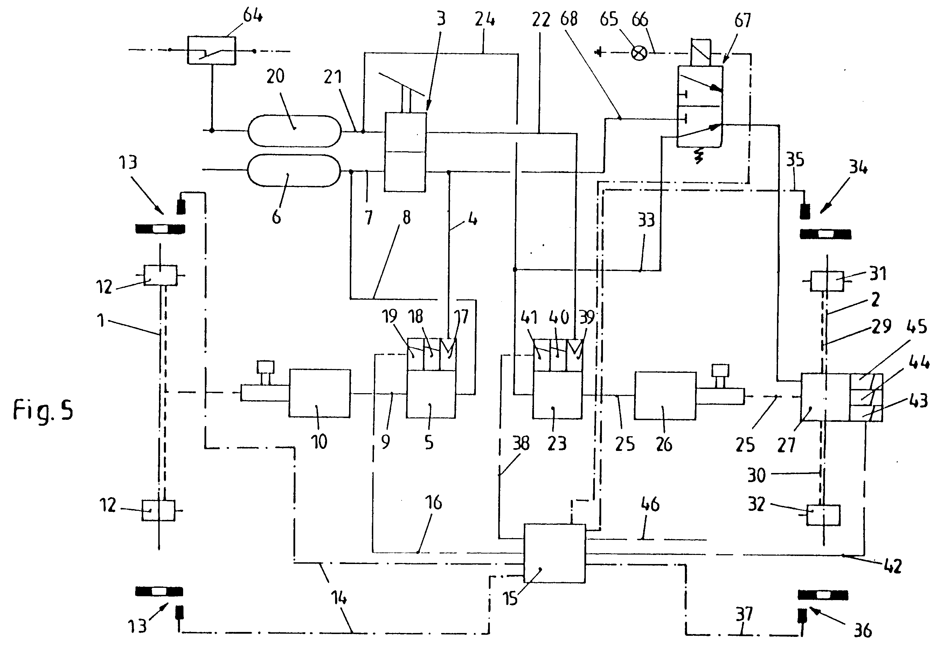

Die in Figur 5 dargestellte Anlage baut auf derjenigen gemäß Figur 1 auf, so daß bezüglich der Beschreibung hierauf verwiesen werden kann. Zusätzlich ist in dem zu dem Vorratsbehälter 20 führenden Versorgungskreis ein Druckschalter 64 vorgesehen, der bei einem Ausfall der Versorgung in diesem Kreis beispielsweise über eine nicht dargestellte Warnlampe dem Fahrer anzeigt, daß die Versorgung des Bremskreises der Antriebsachse 2 ausgefallen ist. Über einen Schalter 65 in einer elektrischen Leitung 66 kann ein Schaltventil 67 betätigt werden. In der dargestellten nicht-betätigten Stellung ermöglicht das Schaltventil 67 den Durchgang in der Leitung 33, während eine Leitung 68, die von der Steuerleitung 4 für die Lenkachse 1 abzweigt, abgeschlossen ist. In der anderen Stellung (betätigte Stellung des Schaltventils 67) wird die Leitung 68 mit dem Teil der Leitung 33 verbunden, der zu dem ASR-Ventil 27 führt. Auf diese Weise wird der ausgesteuerte Bremsdruck für die Lenkachse 1 letztlich mit Hilfe des ASR-Ventils 27 auch zu den Bremszylindern 31, 32 der Antriebsachse 2 geschickt. Es versteht sich, daß der Schalter 65 auch im Sinne einer Hilfsbremse betätigt werden kann.

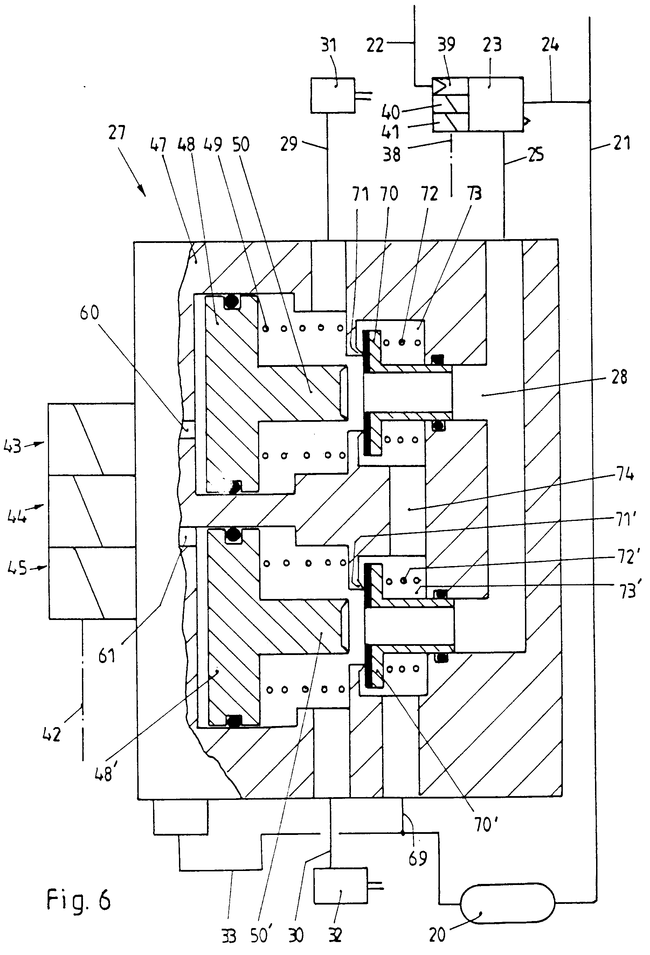

Das in Figur 6 dargestellte ASR-Ventil 27 ist als rein pneumatisches Relaisventil ausgebildet. Über eine Leitung 69 wird das ASR-Ventil 27 mit Vorratsluft versorgt. Den Verstärkerkolben 48 bzw. 48' sind hier keine Schließkolben zugeordnet, sondern Doppelventilkörper 70, 70', die mit einem eingezogenen Rand 71 bzw. 71' Einlaßventile 70, 71 bzw. 70', 71' bilden. Die betreffenden Auslaßventile 50, 70 bzw. 50', 70' werden von den Fortsätzen 50, 50' und den Doppelventilkörpern 70, 70' gebildet. Die Doppelventilkörper 70, 70' sind auf Federn 72, 72' abgestützt, so daß im Gehäuse 47 des ASR-Ventils 27 Vorratskammern 73 und 73' gebildet sind, die über die Leitungen 69 und 74 miteinander in Verbindung stehen. Es versteht sich, daß bei diesem rein pneumatisch ausgebildeten ASR-Ventil 27 in der Ausgangsleitung 25 kein Druckübersetzer 26 pneumatisch/hydraulisch vorgesehen ist, was natürlich nicht ausschließt, daß ein rein pneumatischer Druckübersetzer vorgesehen sein könnte.

### BEZUGSZEICHENLISTE

- 1: - Lenkachse
- 2: - Antriebsachse
- 3: - Bremsventil
- 4: - Steuerleitung
- 5: - Regelventil
- 6: - Vorratsbehälter
- 7: - Leitung
- 8: - Leitung
- 9: - Ausgangsleitung
- 10: - Druckübersetzer
- 11: - hydraulische Leitung
- 12: - Bremszylinder
- 13: - Drehzahlsensor
- 14: - elektrische Leitung
- 15: - Elektronik
- 16: - elektrische Leitung
- 17: - Magnetventil
- 18: - Magnetventil
- 19: - Magnetventil
- 20: - Vorratsbehälter
- 21: - Leitung
- 22: - Steuerleitunmg
- 23: - Regelventil
- 24: - Leitung
- 25: - Ausgangsleitung
- 26: - Druckübersetzer
- 27: - ASR-Ventil
- 28: - Verzweigungsstelle
- 29: - Abzweigleitung
- 30: - Abzweigleitung
- 31: - Bremszylinder
- 32: - Bremszylinder
- 33: - Leitung
- 34: - Drehzahlsensor
- 35: - elektrische Leitung
- 36: - Drehzahlsensor
- 37: - elektrische Leitung
- 38: - elektrische Leitung
- 39: - Magnetventil
- 40: - Magnetventil
- 41: - Magnetventil
- 42: - elektrische Leitung
- 43: - Magnetventil
- 44: - Magnetventil
- 45: - Magnetventil
- 46: - Leitung
- 47: - Gehäuse
- 48: - Verstärkerkolben
- 49: - Rückführfeder
- 50: - Fortsatz
- 51: - Ventilplatte
- 52: - Schließkolben
- 53: - Bohrung
- 54: - Querbohrung
- 55: - Rand
- 56: - Druckraum
- 57: - Wirkraum
- 58: - Leitung
- 59: - Entlüftungsöffnung
- 60: - Leitung
- 61: - Leitung
- 62: - Hilfskolben
- 63: - Leitung
- 64: - Druckschalter
- 65: - Schalter
- 66: - elektrische Leitung
- 67: - Schaltventil
- 68: - Leitung
- 69: - Leitung
- 70: - Doppelventilkörper
- 71: - Rand
- 72: - Feder
- 73: - Vorratskammer
- 74: - Leitung

## Patentansprüche

1. Antiblockierbremsanlage für Fahrzeuge, mit einer Antriebsachse (2), die für jede Fahrzeugseite je ein Rad, einen Bremszylinder (31, 32) und je einen diesem Rad zugeordneten Drehzahlsensor (34, 36) aufweist, mit einem gemeinsamen Regelventil (23) für den Bremsdruck in den Bremszylindern und mit einer Elektronik (15) zur Verarbeitung der von den Drehzahlsensoren abgegebenen Signale und zur Ansteuerung des Regelventils (23), wobei von dem Regelventil eine Ausgangsleitung (25) zu einer Verzweigungsstelle (28) und von dort je eine Abzweigleitung (29, 30) zu dem Bremszylinder (31, 32) an dem betreffenden Rad führt, dadurch gekennzeichnet, daß an der Verzweigungsstelle (28) ein ASR-Ventil (27) vorgesehen ist, welches in der nicht-betätigten Stellung die Ausgangsleitung (25) mit den beiden Abzweigleitungen (29, 30) verbindet und in der betätigten Stellung die Ausgangsleitung (25) von der betreffenden Abzweigleitung (29 oder 30) absperrt und über ein Hilfssystem (33, 48, 52, 48', 52', 43, 44, 45) Bremsdruck in dem betreffenden Bremszylinder aufbaut.

2. Antiblockierbremsanlage nach Anspruch 1, dadurch gekennzeichnet, daß das ASR-Ventil (27) zum Aufbau eines modulierenden Bremsdruckes in dem betreffenden Bremszylinder ausgebildet ist.

3. Antiblockierbremsanlage nach Anspruch 2, dadurch gekennzeichnet, daß das ASR-Ventil (27) als Magnetventil (43, 44, 45) ausgebildet ist und mindestens drei von der Elektronik (15) gesteuerte Magnete und je einen Verstärkerkolben (48, 48') für jede Abzweigleitung (29, 30) aufweist.

4. Antiblockierbremsanlage nach Anspruch 3, dadurch gekennzeichnet, daß jedem Verstärkerkolben (48, 48') ein beweglich dichtend im Gehäuse (47) des ASR-Ventils (27) gelagerter Schließkolben (52, 52') zugeordnet ist, der als Bestandteil der Abzweigleitung eine Bohrung (53, 53') aufweist, die mit einem Fortsatz (50, 50') des Verstärkerkolbens (48, 48') verschließbar ist.

5. Antiblockierbremsanlage nach Anspruch 3 oder 4, dadurch gekennzeichnet, daß der Verstärkerkolben (48, 48') in einen inneren und einen äußeren Kolben unterteilt ist.

6. Antiblockierbremsanlage nach einem der Ansprüche 1 bis 5, dadurch gekennzeichnet, daß das Regelventil (23) als pneumatisches Ventil ausgebildet ist, in der Ausgangsleitung (25) ein Druckwandler oder Druckübersetzer (26) pneumatisch/hydraulisch vorgesehen ist und daß das ASR-Ventil (27) pneumatisch unterstützt ausgebildet ist.

7. Antiblockierbremsanlage nach einem der Ansprüche 1 bis 6, dadurch gekennzeichnet, daß das ASR-Ventil (27) für jeden Verstärkerkolben (48, 48') zwei in Reihe geschaltete Magnetventile (43, 44; 43', 45) aufweist, von denen die vorgeschalteten Magnetventile (43, 43') ohne und die nachgeschalteten Magnetventile (44, 45) mit eigener Entlüftung ausgebildet sind.

8. Antiblockierbremsanlage nach einem der Ansprüche 1 bis 7, dadurch gekennzeichnet, daß dem ASR-Ventil (27) ein Schaltventil (67) vorgeschaltet ist, welches in der einen Stellung Vorratsdruck und in der anderen Stellung modulierten Bremsdruck zu dem ASR-Ventil (27) schickt.

9. Antiblockierbremsanlage nach Anspruch 1 bis 3, dadurch gekennzeichnet, daß das ASR-Ventil (27) als pneumatisches Relaisventil ausgebildet ist.

10. Antiblockierbremsanlage nach Anspruch 9, dadurch gekennzeichnet, daß das ASR-Ventil (27) für jeden Verstärkerkolben (48, 48') einen hohlen Doppelventilkörper (70, 70') aufweist, durch den die jeweilige Abzweigleitung (29, 30) hindurchgeführt ist.

## Claims

1. An anti-lock brake system for vehicles, having a drive axle (2), which comprises a wheel, a brake cylinder (31, 32) and a wheel speed sensor (34, 36) for each side of the vehicle, having a common control valve (23) for the braking pressure in the brake cylinders, and having a electronic control unit (15) to process the signals generated by the wheel speed sensors and to actuate the control valve (23), an outward conduit (25) connecting a branching point (28) with a branching conduit (29, 30) each to the brake cylinders (31, 32) of the respective wheel, **wherein** an ASR-valve (27) is provided on the branching point (28), which in the non-actuated position connects the outward conduit (25) with the two branching conduits (29, 30) and in the actuated position cuts the outward conduit (25) from the branching conduit (29 or 30) and builds up braking pressure in the brake cylinder (31 or 32) concerned via an additional system (33, 48, 52, 48', 52', 43, 44, 45).

2. The anti-lock system of Fig. 1, **wherein** the ASR-valve (27) is designed to generate a modulated braking pressure in the brake cylinder concerned.

3. The anti-lock system of claim 2**, wherein** the ASR-valve (27) is designed as a solenoid valve (43, 44, 45) and comprises at least three magnets controlled by the electronic control unit (15) and an intensification piston (48, 48') each assigned to a branching conduit (29, 30) each.

4. The anti-lock system of claim 3, **wherein** two pistons (52, 52') are assigned to the intensification pistons (48, 48'), the pistons being sealingly and slidingly guided in the housing (47) of the ASR-valve (27), the pistons as part of the branching conduit comprising a bore (53, 53'), which may be closed by a projection (50, 50') of the intensification piston (48, 48').

5. The anti-lock system of claim 3 or 4, **wherein** the intensification piston (48, 48') is divided into an inner and an outer piston.

6. The anti-lock system of one of the claims 1 to 5, **wherein** the control valve (23) is designed as a pneumatic valve, a pressure modulator (26) or a pressure intensifier pneumatic/hydraulic is provided, and pneumatical support is given to the ASR-valve (27).

7. The anti-lock system of one of the claims 1 to 6, **wherein** the ASR-valve (27) comprises two solenoid valves (43, 44; 43', 45) arranged in series and assigned to each intensification piston (48, 48'), the upstream located solenoid valves (43, 43') being designed without and the downstream located solenoid valves (44, 45) being provided with separate exhaust opening.

8. The anti-lock system on one of the claims 1 to 7, **wherein** a switching valve (67) is positioned upstream the ASR-valve (27), which processes reservoir pressure in the one position and modulated braking pressure in the other position to the ASR-valve (27).

9. The anti-lock system of claims 1 to 3, **wherein** the ASR-valve (27) is designed as a pneumatic relais valve.

10. The anti-lock system or claim 9, **wherein** the ASR-valve (27) comprises a hollow double valve body (70, 70') for each intensification piston (48, 48') connecting the branching conduit (29, 30) concerned.

## Revendications

1. Système de freinage antiblocage pour véhicules, avec un essieu moteur (2), qui comporte pour chaque côté du véhicule, une roue, un cylindre de freinage (31, 32) et un capteur de vitesse de rotation (34, 36), associé à cette roue, avec une soupape de régulation (23) commune pour la pression de freinage dans les cylindres de freinage et avec une électronique (15) pour le traitement des signaux, délivrés par les capteurs de vitesse de rotation, et pour la commande de la soupape de régulation (23), une conduite de sortie (25) menant de la soupape de régulation vers un point de bifurcation (28) et de là, une conduite de dérivation (29, 30) menant au cylindre de freinage (31, 32) sur la roue concernée, caractérisé en ce qu'au point de bifurcation (28) est prévue une soupape de dispositif antipatinage (27), qui dans la position non actionnée, relie la conduite de sortie (25) aux deux conduites de dérivation (29, 30) et dans la position actionnée, sépare la conduite de sortie (25) de la conduite de dérivation (29 ou 30) concernée et fait monter la pression de freinage dans le cylindre de freinage concerné, par un système auxiliaire (33, 48, 52, 48', 52', 43, 44, 45).

2. Système de freinage antiblocage selon la revendication 1, caractérisé en ce que la soupape de dispositif antipatinage (27) est conçue pour la constitution d'une pression de freinage de modulation dans le cylindre de freinage concerné.

3. Système de freinage antiblocage selon la revendication 2, caractérisé en ce que la soupape de dispositif antipatinage (27) est conformée en soupape magnétique (43, 44, 45) et comporte au moins trois aimants, commandés par l'électronique (15) et un piston d'amplificateur (48, 48') pour chaque conduite de dérivation (29, 30).

4. Système de freinage antiblocage selon la revendication 3, caractérisé en ce qu'à chaque piston d'amplificateur (48, 48') est associé un piston de fermeture (52, 52'), monté mobile, de manière à assurer l'étanchéité, dans le boîtier (47) de la soupape de dispositif antipatinage (27), lequel piston présente, en tant que partie constitutive de la conduite de dérivation, un perçage (53, 53') qui peut être fermé par un prolongement (50, 50') du piston d'amplificateur (48, 48').

5. Système de freinage antiblocage selon la revendication 3 ou 4, caractérisé en ce que le piston d'amplificateur (48, 48') est partagé en un piston intérieur et un piston extérieur.

6. Système de freinage antiblocage selon l'une des revendications 1 à 5, caractérisé en ce que la soupape de régulation (23) est conformée en soupape pneumatique, dans la conduite de sortie (25) est prévu pneumatiquement/hydrauliquement un convertisseur de pression ou un multiplicateur de pression (26), et en ce que la soupape de dispositif antipatinage (27) est assistée pneumatiquement.

7. Système de freinage antiblocage selon l'une des revendications 1 à 6, caractérisé en ce que la soupape de dispositif antipatinage (27) comporte pour chaque piston d'amplificateur (48, 48'), deux soupapes magnétiques (43, 44 ; 43', 45), montées en série, dont les soupapes magnétiques (43, 43') amont n'ont pas de mise à l'atmosphère propre et les soupapes magnétiques (44, 45) aval ont leur propre mise à l'atmosphère.

8. Système de freinage antiblocage selon l'une des revendications 1 à 7, caractérisé en ce qu'en amont de la soupape de dispositif antipatinage (27) est montée une soupape de commutation (67), qui dans une position envoie de la pression de réserve et dans l'autre position de la pression de freinage modulée, à la soupape de dispositif antipatinage (27).

9. Système de freinage antiblocage selon les revendications 1 à 3, caractérisé en ce que la soupape de dispositif antipatinage (27) est conçue en tant que soupape de relais pneumatique.

10. Système de freinage antiblocage selon la revendication 9, caractérisé en ce que la soupape de dispositif antipatinage (27) comporte pour chaque piston d'amplificateur (48, 48'), un double corps de soupape creux (70, 70'), à travers lequel passe la conduite de dérivation (29, 30) respective.
